Europäisches Patentamt

European Patent Office

Office européen des brevets

(11) Numéro de publication: **0 031 274**
**B1**

(12) FASCICULE DE BREVET EUROPEEN

(45) Date de publication du fascicule du brevet: **06.03.85**

(51) Int. Cl.⁴: **G 01 C 19/64**

(21) Numéro de dépôt: **80401762.2**

(22) Date de dépôt: **09.12.80**

(54) **Dispositif interférométrique en anneau et son application à la détection d'effets non réciproques.**

(30) Priorité: **14.12.79 FR 7930722**

(43) Date de publication de la demande:
**01.07.81 Bulletin 81/26**

(45) Mention de la délivrance du brevet:
**06.03.85 Bulletin 85/10**

(84) Etats contractants désignés:
**DE GB NL SE**

(56) Documents cités:
**DE-A-1 439 416**
**DE-A-2 906 870**
**FR-A-2 409 518**
**FR-A-2 416 450**

**APPLIED OPTICS, vol. 18, no. 6, Mars 1979,**
**New York, US, S.C. LIN et al.: "Sensitivity**
**analysis of the Sagnac-effect optical fiber ring**
**interferometer", pages 915-931**

(73) Titulaire: **THOMSON-CSF.**
**173, Boulevard Haussmann**
**F-75379 Paris Cedex 08 (FR)**

(72) Inventeur: **Arditty, Hervé**
**THOMSON-CSF SCPI 173, Bld Haussmann**
**F-75360 Paris Cedex 08 (FR)**
Inventeur: **Papuchon, Michel**
**THOMSON-CSF SCPI 173, Bld Hausmann**
**F-75360 Paris Cedex 08 (FR)**
Inventeur: **Puech, Claude**
**THOMSON-CSF SCPI 173, Bld Haussmann**
**F-75360 Paris Cedex 08 (FR)**

(74) Mandataire: **Wang, Pierre et al**
**THOMSON-CSF SCPI 173, Bld Haussmann**
**F-75379 Paris Cedex 08 (FR)**

Courier Press, Leamington Spa, England.

EP 0 031 274 B1

## Description

L'invention se rapporte aux interféromètres en anneau permettant de mesurer l'effet des phénomènes non réciproques tels que l'effet Faraday et l'effet Sagnac avec une très grande sensibilité et une très grande stabilité.

Dans un interféromètre en anneau, ou interféromètre de Sagnac, deux faisceaux parcourent en sens opposés un même trajet optique, et interfèrent à la sortie de ce trajet. Pour autant qu'une perturbation de ce trajet présente les mêmes caractéristiques pour les deux sens de propagation et ne varie pas pendant la durée du transit de la lumière dans l'interféromètre, les deux faisceaux sont affectés identiquement et leur phase relative demeure inchangée. Les perturbations de ce type sont dites "réciproques". Parce que le temps de transit dans un interféromètre est généralement très petit, les variations d'une perturbation pendant ce temps, sauf si celle-ci est introduite volontairement, sont généralement négligeables.

Mais il existe des perturbations "non réciproques" qui présentent une amplitude différente aux deux sens de propagation; il s'agit d'effets physiques qui, en établissant son orientation complète, détruisent la symétrie de l'espace ou du milieu.

Deux effets connus présentent cette propriété:
— l'effet Faraday, ou effet magnéto-optique colinéaire, où un champ magnétique crée une orientation préférentielle du spin des électrons du matériau optique.
— l'effet Sagnac, ou effet inertiel relativiste, où la rotation de l'interféromètre par rapport à un repère galliléen détruit la symétrie des temps de propagation.

Dans un interféromètre en anneau, seules des perturbations "non réciproques" de ce type ont un effet sur le signal détecté. Les variations dimensionnelles telles que fluage, dilatation thermique, variation de pression, où les variations d'indice de réfraction n'ont, elles, aucun effet sur le signal détecté. On dispose donc, en principe, d'un instrument de mesure des effets "non réciproques" qui présente une stabilité parfaite.

En pratique, pour que les perturbations réciproques aient un effet rigoureusement nul, il faut que les deux faisceaux de l'interféromètre parcourent exactement le même trajet. Plus précisément, il faut que les deux ondes soient deux solutions identiques de l'équation d'onde de l'interféromètre, le signe du paramètre "temps" étant inversé.

Lorsque l'interféromètre est réalisé en propagation libre, et c'est le cas de l'utilisation d'éléments optiques discrets, cette condition n'est jamais strictement respectée:
— l'équation d'onde présente un "continuum" de solutions et le moindre désalignement des optiques conduit à l'obtention de solutions différentes, donc de fronts d'ondes non superposés;
— même pour des solutions identiques lorsque des ondes d'extension infinie sont considérées, ondes planes par exemple, la distribution d'intensité, forcément limitée en pratique, diffère, en fait, ne serait-ce qu'à cause de la diffraction, et rompt la réciprocité.

L'art connu en matière d'interféromètre en anneau peut être illustré par référence à la demande de brevet français FR—A—2 416 450.

Une solution de type monomode, consistant en un interféromètre réalisé en structure guide d'onde de bout en bout est décrite dans la demande de brevet français FR—A—2 409 518. Dans ce cas, l'équation d'onde présente un nombre discret de solutions, et il est possible, en principe, d'utiliser la même de ces solutions, ou modes dans chacun des deux sens de propagation. Cependant, parce que les couplages entre modes sont toujours présents, il est préférable que la structure de guidage soit monomodale. Mais cette solution est technologiquement difficile à mettre en oeuvre. De plus, des filtres de modes sont connus en soi, voir par exemple DE—A—1 439 416.

L'invention a pour but une structure permettant d'assurer facilement les conditions de réciprocité rigoureuse à un interféromètre réalisé par ailleurs de façon quelconque. Cette structure impose à l'onde qui parcourt l'interféromètre et qui est détectée d'être contenue dans un mode unique.

Elle a plus précisément pour objet un dispositif interférométrique en anneau tel que défini dans la revendication 1.

L'invention a encore pour objet un gyromètre et un système de mesure sensible au champ magnétique mettant en oeuvre un tel dispositif, selon les revendications 13 et 14.

L'invention sera mieux comprise au moyen de la description qui suit, illustrée par les figures annexées dont le contenu est le suivant:
— la figure 1 est un schéma de principe d'un interféromètre en anneau selon l'art connu;
— la figure 2 est un schéma de principe d'un interféromètre selon l'invention;
— les figures 3 à 6 représentent des exemples de réalisation de filtres de modes;
— la figure 7 est une disposition intéressante d'un filtre de mode par rapport au faisceau;
— les figures 8 à 10 schématisent des variantes de l'arrangement de différents éléments dans l'interféromètre selon l'invention.
— la figure 11 est un exemple d'interféromètre en anneau selon l'invention.

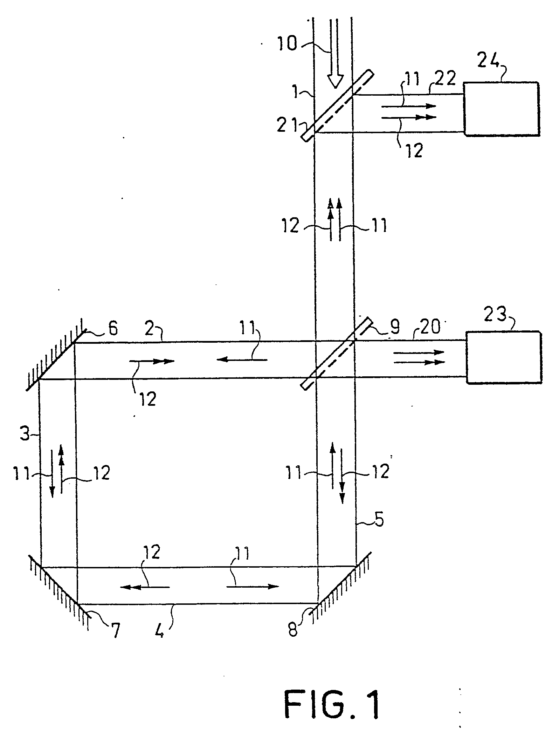

La figure 1 montre un schéma de principe d'un interféromètre en anneau selon l'art connu.

Le chemin optique de cet interféromètre est constitué du bras d'entrée 1 et de l'anneau optique formé ici par les quatre tronçons rectilignes 2, 3, 4, 5, déterminés par les trois miroirs réfléchissants 6, 7, 8. L'entrée de l'anneau est matérialisée par la lame semi-transparente 9. Le faisceau incident 10 arrive par le bras d'entrée 1, sur la lame semi-transparente 9. Cette lame en réfléchit dans le tronçon 2 une partie qui constitue le faisceau 11 représenté par les flèches portant cette référence. Elle transmet l'autre partie, dans le tronçon 5, ce qui constitue le faisceau 12, représenté de même par les flèches portant cette référence.

Le faisceau 11 parcourt l'anneau de l'interféromètre en suivant dans l'ordre, les tronçons 2, 3, 4, 5, tandis que le faisceau 12 les parcourt en sens inverse, c'est à dire en suivant les tronçons 5, 4, 3, 2. Les deux faisceaux arrivent alors sur la lame semi-transparente 9.

Le faisceau 11 est transmis en partie dans le bras 1 de l'interféromètre, et réfléchi en partie dans le bras 20.

Le faisceau 12, lui, est réfléchi en partie dans le bras 1 et transmis en partie dans le bras 20.

Deux portions de ces deux faisceaux interfèrent donc dans les bras 1 et 20.

En absence de perturbations non réciproques, dans le bras 20, l'interférence est destructive et le signal détecté par le détecteur 23 est nul, tandis que dans le bras 1 l'interférence est constructive et le signal est maximal.

Pour extraire du bras d'entrée 1, l'énergie à détecter, on peut la séparer de l'énergie incidente, par exemple par une lame semi-réfléchissante, comme représentée en 21 sur la figure 1. On détecte alors le signal provenant de l'interférence d'une partie des faisceaux 11 et 12 dans le bras 22, à l'aide du détecteur 24.

En pratique, un tel interféromètre n'est jamais strictement réciproque. Il faut, pour cela, qu'il soit parcouru par une onde contenue dans un seul mode optique. Ce but peut être atteint en intercalant un filtre de mode sur le bras de l'interféromètre pour satisfaire à cette condition.

Un filtre de mode est une structure présentant des pertes infinies pour toute onde exceptée une solution particulière. En l'intercalant sur un faisceau lumineux, l'énergie émise par la source dont est issue ce faisceau n'est pas entièrement, ou pas exactement dans le mode propre du filtre, et seule la projection de cette énergie sur ce mode traverse le filtre.

Si on intercale un tel filtre sur le bras d'entrée de l'interféromètre, l'onde pénétrant dans l'interféromètre proprement dit est donc atténuée, mais contenue dans un mode unique, bien défini. Après parcours de la boucle optique de l'interféromètre et recombinaison par la lame séparatrice, la fraction d'énergie optique obtenue par interférence des deux ondes dans le bras de l'interféromètre, présente une structure de mode complexe. En général, la projection de cette énergie sur le mode propre du filtre, le même qu'à l'aller, est non nulle: cette fraction est atténuée mais contenue dans ce même mode unique et bien défini. En l'absence de phénomènes non linéaires, et, bien sûr, en l'absence de phénomènes non réciproques proprement dits, la fraction d'énergie contenue, à l'aller comme au retour dans ce même mode est linéairement indépendante du reste d'énergie optique: tout se passe comme si ce reste d'énergie n'existait pas, et les conditions d'unicité de mode nécessaires et suffisantes à une réciprocité rigoureuse du dispositif sont satisfaites.

En fait, pour la plupart des filtres de mode que l'on peut réaliser, la polarisation de l'onde traversant le filtre est un degré de liberté supplémentaire, c'est à dire que, en fait, le filtre est bimode. Lorsque les constantes de propagation, les distributions d'intensité ou les pertes de ces deux modes diffèrent franchement, cela suffit à les séparer. Si, au contraire, les deux modes sont quasi-dégénérés, l'un des deux peut être rejeté par un polariseur, Nicol, Glan, film polarisant, polariseur intégré, etc....

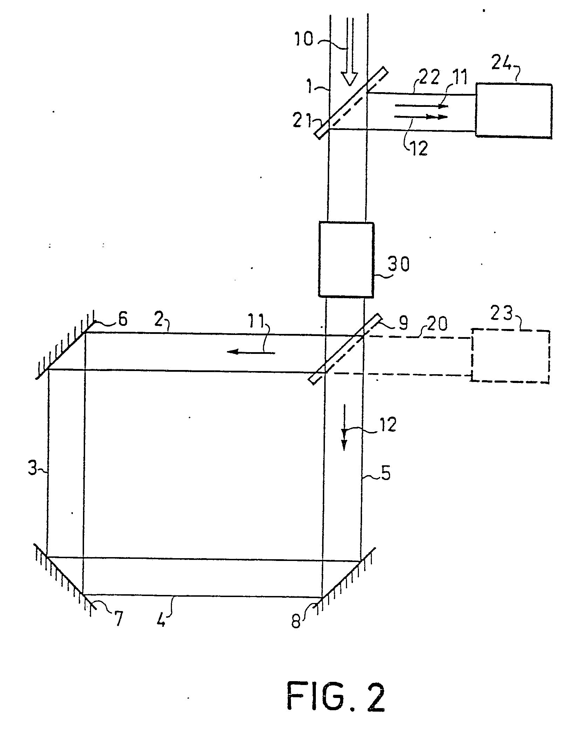

La figure 2 est un schéma de principe d'un interféromètre en anneau selon l'invention.

On y reconnait les différents éléments qui constituent l'interféromètre de la figure 1, à savoir, le bras d'entrée 1, et la boucle optique constitué des tronçons 2, 3, 4, 5, délimités par les miroirs 6, 7, 8. L'entrée de la boucle est matérialisée par la lame semi-transparente 9, et le signal à détecter est extrait du bras d'entrée et envoyé sur le bras 22 par la lame semi-transparente 21.

On y voit en plus, intercalé sur le bras d'entrée 1, le dispositif de filtrage de mode 30.

Le faisceau incident 10 traverse ce dispositif, et la fraction qui en sort est contenue dans un mode unique. Cette fraction arrive sur la lame semi-transparente 9 pour y être séparée en deux faisceaux 11 et 12 qui parcourent l'anneau dans les deux sens. Une partie des deux faisceaux est reprise ensuite dans le bras 1 par la lame semi-transparente 9, et retraverse le dispositif de filtrage de mode 30. A la sortie, les deux faisceaux 11 et 12 que l'on envoie dans le bras 22 au moyen de la lame semi-transparente 21 sont contenus dans le même mode, ce qui rend l'interféromètre selon l'invention insensible aux perturbations dites réciproques. Le signal détecté par le détecteur 24 est donc une mesure sensible et stable de phénomènes non réciproques.

Dans le bras 20, on peut détecter à l'aide du détecteur 23, un signal correspondant à l'interférence des deux faisceaux n'ayant pas retraversé le dispositif de filtrage de mode.

On décrit ci-après, plusieurs exemples, non limitatifs, de réalisation de filtres de mode.

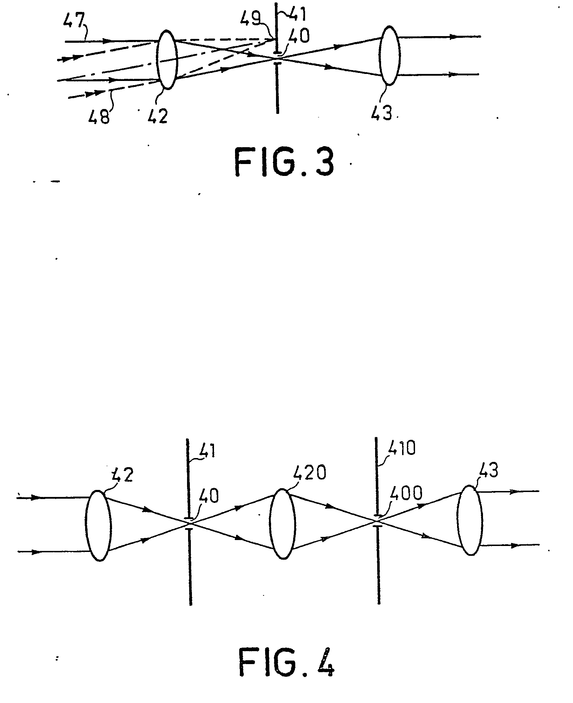

La figure 3 représente un premier exemple de réalisation d'un filtre de mode. C'est une cellule constituée par l'association d'un trou de filtrage 40 dans un écran opaque 41 et de deux lentilles 42 et 43. Les deux lentilles sont disposées de telle sorte que leur plan focal coïncide avec le plan de l'écran 41. Seul le mode 47 représenté en trait plein peut traverser le filtre car il est focalisé sur le trou 40. Le mode 48, focalisé en 49 est arrêté. Pour que l'atténuation soit infinie en dehors du mode propre, il faut que les dimensions du trou de filtrage correspondent à la limite de diffraction et que les lentilles respectent cette limite.

C'est pratiquement impossible à réaliser. Pour améliorer la qualité du filtre, on peut associer plusieurs cellules de ce type, disposées en cascade, comme représenté sur la figure 4. La lentille 420 est intercalée entre les deux écrans 41 et 410 percés de trous 40 et 400 alignés sur l'axe du système.

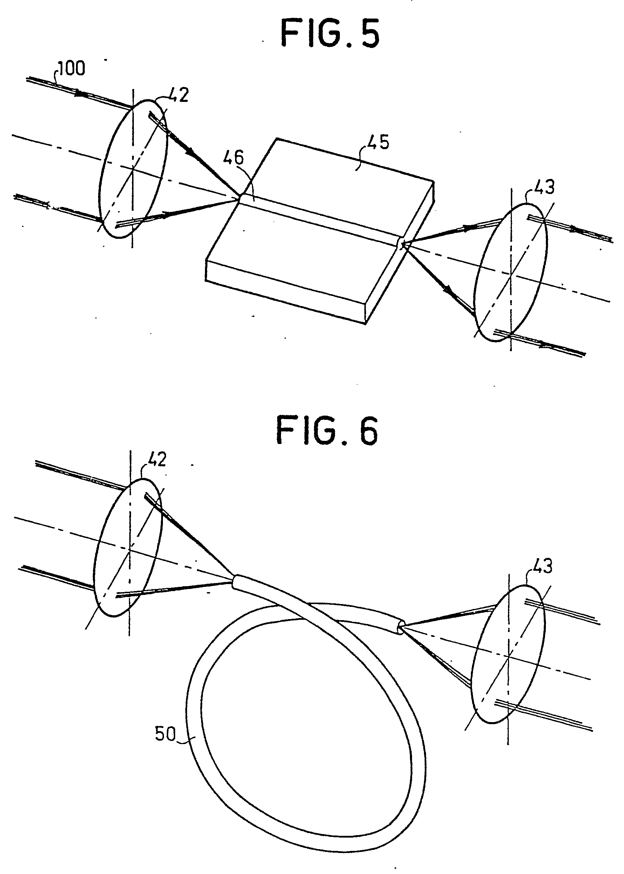

Un autre exemple de réalisation d'un filtre de mode est représenté sur la figure 5. C'est un guide d'onde 46 réalisé en optique intégrée, par exemple par diffusion de titane dans un substrat cristallin de niobate de lithium représenté en 45 sur la figure 5.

Ce composant est associé à deux lentilles 42 et 43, pour coupler les rayonnements incidents et émergents au guide.

La lentille 42 focalise la faisceau incident 100 sur l'entrée du guide 46 délimité dans le substrat et la lentille 43 récupère le faisceau sortant pour en faire un faisceau parallèle.

On sait réaliser un guide d'onde intégré monomode, ce qui évite l'utilisation de polariseurs.

La figure 6 représente un troisième type de filtre de mode. Il est réalisé à l'aide d'une fibre optique 50 couplée par deux lentilles 42 et 43.

Dans ce cas, on sait réaliser une fibre optique strictement monomode, en agissant sur différents paramètres, tels que la forme de la section de la fibre, la contrainte à laquelle on la soumet, ou l'enroulement imposé dont le rayon de courbure correspond à la transmission d'un seul mode. Une fibre optique monomode de quelques centimètres représente un filtre de mode presque parfait.

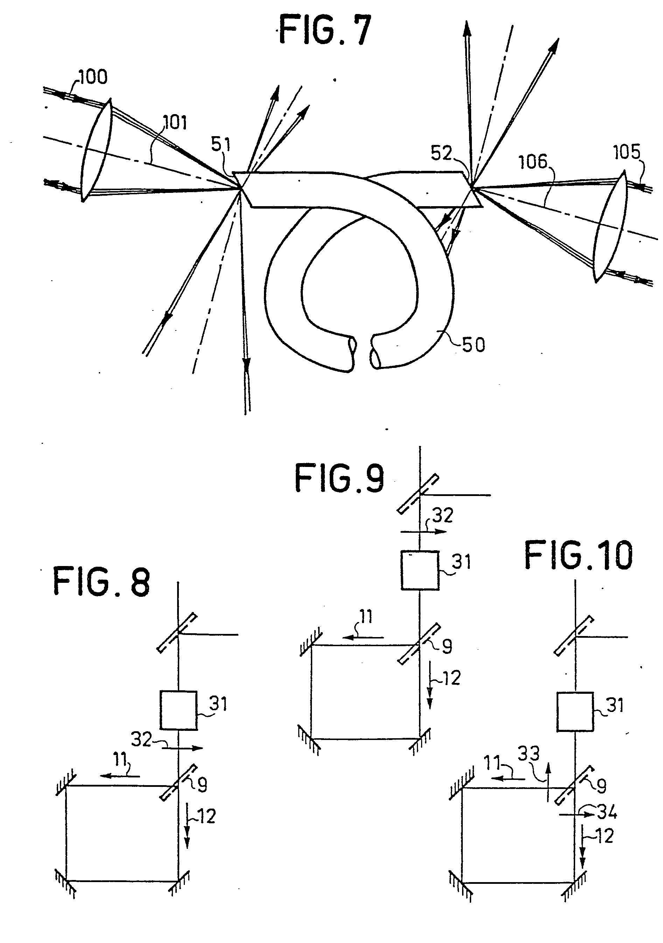

Il y a lieu cependant de prendre quelques précautions dans le positionnement de la fibre par rapport à l'axe du faisceau pour éviter les réflexions d'énergie vers les éléments optiques de couplage. Il est avantageux que les extrémités qui jouent chacune le rôle d'entrée, soit à l'aller, soit au retour du faisceau, forment un angle non droit avec l'axe de propagation. On a représenté cette disposition sur la figure 7.

La face d'entrée 51 de la fibre 50 fait un angle non droit avec l'axe 101 du faisceau incident 100. Il en est de même pour la face de sortie 52, qui joue le rôle d'entrée au retour du faisceau Elle fait un angle non droit avec l'axe 106 du faisceau émergeant 105.

Il est avantageux d'utiliser les mêmes précautions dans le cas d'un filtre intégré.

Dans le cas très général où le filtre est en fait bimode, et où il est nécessaire d'utiliser au moins un polariseur pour le rendre parfaitement monomode, on peut mettre en oeuvre différentes configurations, équivalentes du point de vue du fonctionnement, comme représentées sur les figures 8 à 10.

Sur la figure 8, on a placé le polariseur 32 après le filtre bi-mode 31, avant la lame semi-transparente 9. On peut, comme sur la figure 9, placer le polariseur 32 juste avant le filtre bi-mode 31.

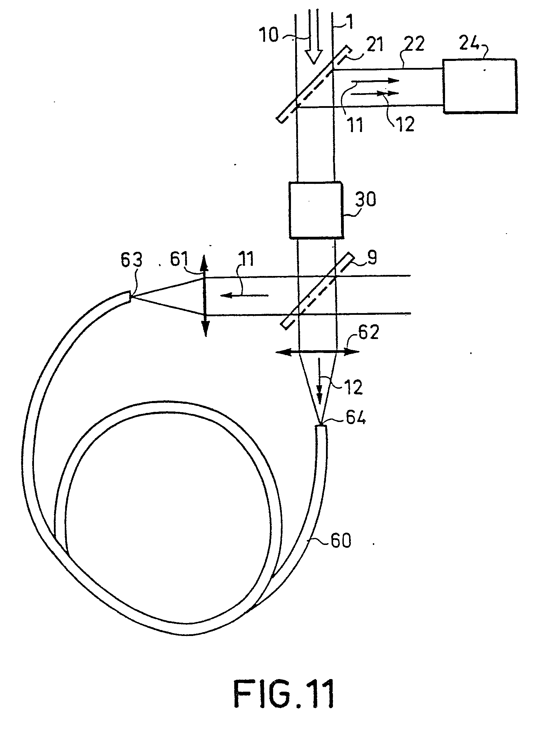

La configuration représentée sur la figure 10 utilise deux polariseurs. L'un 33, est placé sur le tronçon 2 de l'anneau de l'interféromètre, juste après la lame semi-transparente 9. L'autre, 34, est placé sur le tronçon 5, également à côté de la lame 9. Les faisceaux 11 et 12 traversent ainsi les deux polariseurs.

La figure 11 représente un interféromètre en anneau dont le trajet est réalisé en fibre optique monomode, mais dont le coeur est constitué d'éléments optiques traditionnels. L'addition du filtre de mode rend un tel interféromètre strictement réciproque.

Le faisceau incident 10 traverse le filtre de mode 30 et se sépare en deux sur la lame semi-transparente 9. Une partie du faisceau est envoyée dans la fibre optique 60 par l'intermédiaire de la lentille 61 qui le focalise sur l'entrée 63 de la fibre, tandis que l'autre partie du faisceau est envoyée sur cette même fibre 60 par l'intermédiaire de la lentille 62 qui le focalise sur l'entrée 64 de cette fibre. Les deux faisceaux parcourent la fibre en sens inverse et sont repris dans le bras de l'interféromètre par la lame semi-transparente 9. Ils retraversent le filtre de mode 30, et sont séparés du faisceau incident par la lame semi-transparente 21 qui les envoie en partie dans le bras 22 dans lequel on détecte le signal d'interférence, sur le détecteur 24.

La stabilité d'un interféromètre en anneau qui met en oeuvre les dispositifs décrits est limitée seulement par le bruit quantique de la lumière. Il devient possible de mesurer l'effet des phénomènes non réciproques avec une sensibilité très grande, par exemple $10^{-8}$ frange. Si la disposition indiquée n'est pas utilisée, la stabilité dimensionnelle nécessaire à l'observation stable d'un déphasage de $10^{-8}$ frange est de l'ordre de $10^{-14}$ m, impossible à obtenir en pratique.

**Revendications**

1. Dispositif interférométrique en anneau comprenant des éléments optiques (6—8) définissant une boucle fermée (2—8), des moyens optiques (9), couplés à cette boucle fractionnant un rayonnement cohérent incident (10) en deux rayonnements (11, 12) circulent en sens contraire dans ladite boucle, des moyens (24) de détection de l'interférence des deux rayonnements (11, 12), lesdits moyens optiques (9) retransmettant ces deux rayonnements à ces moyens (24) de détection, la propagation dudit rayonnement cohérent incident (10) et la propagation des deux rayonnements retransmis (11, 12), s'effectuant sur un trajet optique (1) présentant un parcours commun, caractérisé en ce qu'il comprend, disposés sur ce parcours commun, de manière à ce qu'ils soient traversés, dans un premier sens, par le rayonnement cohérent incident (10) et, en sens contraire, par les deux rayonnements retransmis (11, 12), des moyens de filtrage (30) permettant de sélectionner un mode particulier parmi tous les modes susceptibles de se propager dans ladite boucle fermée et d'être retransmis aux moyens (24) de détection.

2. Dispositif selon la revendication 1, caractérisé en ce que les moyens de filtrage (30) sont constitués par un filtre de mode ne transmettant qu'un seul mode.

3. Dispositif selon la revendication 1, caractérisé en ce que les moyens de filtrage comprennent un filtre de mode (31) associé à des moyens de polarisation (32).

4. Dispositif selon la revendication 3, caractérisé en ce que les moyens de polarisation (32) sont situés en amont de l'entrée de la boucle fermée.

5. Dispositif selon la revendication 3, caractérisé en ce que les moyens de polarisation (32) sont situés à l'intérieur de la boucle fermée.

6. Dispositif selon l'une quelconque des revendications 2 à 5, caractérisé en ce que le filtre de mode comprend au moins une cellule constituée de lentilles (42, 43) ayant un plan focal commun (41) dans lequel est situé un filtre spatial (40) destiné à isoler le mode désiré.

7. Dispositif selon la revendication 6, caractérisé en ce que pour parfaire le filtrage, la cellule est associée à au moins une autre cellule de même structure, disposée en cascade (40, 41, 42, 420, 410, 400, 43).

8. Dispositif selon l'une quelconque des revendications 2 à 5, caractérisé en ce que le filtre de mode comprend au moins une portion de guide d'onde monomode (46) intégré sur un substrat (45), des moyens optiques (42, 43) de couplage étant prévus pour coupler les rayonnements optiques incidents et émergents aux extrémités du filtre.

9. Dispositif selon l'une quelconque des revendications 2 à 5, caractérisé en ce que le filtre de mode est un guide d'onde comprenant au moins une portion de fibre optique monomode (50), des moyens optiques (42, 44) de couplage étant prévus pour coupler les rayonnements optiques incidents et émergents aux extrémités du filtre.

10. Dispositif selon l'une quelconque des revendications 8 à 9, caractérisé en ce que les faces (51, 52) du guide d'onde (46; 50) sont orientées par rapport aux directions de propagation du faisceau de telle façon que l'énergie réfléchie par ces faces tombe en dehors des moyens optiques de couplage (42, 43).

11. Dispositif selon l'une quelconque des revendications 1 à 10, caractérisé en ce que la boucle de l'interféromètre comprend des miroirs (6, 7, 8).

12. Dispositif selon l'une quelconque des revendications 1 à 10, caractérisé en ce que la boucle de l'interféromètre comprend une fibre optique (60).

13. Gyromètre comportant un dispositif interférométrique selon l'une quelconque des revendications 1 à 12.

14. Système de mesure sensible au champ magnétique comportant un dispositif interférométrique selon l'une quelconque des revendications 1 à 12.

**Patentansprüche**

1. Ringinterferometervorrichtung mit optischen Elementen (6—8), die eine geschlossene Schleife (2—8) bilden, optischen Mitteln (9), die an diese Schleife angekoppelt sind und eine ankommende kohärente Strahlung (10) in zwei Strahlungsteile (11, 12) aufspalten, die in entgegengesetztem Sinne in der Schleife umlaufen, Mitteln (24) zur Detektion der Interferenz der beiden Strahlungsteile (11, 12), wobei die optischen Mittel (9) diese zwei Strahlungsteile zu diesen Detektionsmitteln (24) zurücksenden, wobei die Ausbreitung der genannten ankommenden kohärenten Strahlung (10) sowie die Ausbreitung der beiden zurückübertragenen Strahlungsteile (11, 12) auf einem optischen Weg (1) erfolgen, der eine gemeinsame Bahn aufweist, dadurch gekennzeichnet, daß sie auf dieser gemeinsamen Bahn angeordnet, und zwar derart, daß sie von der ankommenden kohärenten Strahlung (10) in einem ersten Sinne und von den zwei rückübertragenen Strahlungsteilen (11, 12) in entgegengesetztem Sinne durchquert werden, Filtermittel (30) enthält, die es ermöglichen, einen besonderen Mode unter allen denjenigen Moden auszuwählen, die sich in der genannten geschlossenen Schleife ausbreiten und zu den Detektionsmitteln (24) zurückübertragen werden können.

2. Vorrichtung nach Anspruch 1, dadurch gekennzeichnet, daß die Filtermittel (30) durch ein Modenfilter gebildet wird, das nur einen einzigen Mode durchläßt.

3. Vorrichtung nach Anspruch 1, dadurch gekennzeichnet, daß die Filtermittel ein Modenfilter (31) enthalten, welches Polarisationsmitteln (32) zugeordnet ist.

4. Vorrichtung nach Anspruch 3, dadurch gekennzeichnet, daß die Polarisationsmittel (32) vor dem Eingang der geschlossenen Schleife angeordnet sind.

5. Vorrichtung nach Anspruch 3, dadurch gekennzeichnet, daß die Polarisationsmittel (32) innerhalb der geschlossenen Schleife angeordnet sind.

6. Vorrichtung nach einem der Ansprüche 2 bis 5, dadurch gekennzeichnet, daß das Modenfilter wenigstens eine Zelle umfaßt, welche aus Linsen (42, 43) gebildet ist, die eine gemeinsame Brennebene (41) enthalten, in der ein räumliches Filter (40) liegt, das zur Heraustrennung des gewünschten Mode bestimmt ist.

7. Vorrichtung nach Anspruch 6, dadurch gekennzeichnet, daß zur Vervollkommnung der Filterung die Zelle wenigstens einer weiteren Zelle der gleichen Struktur zugeordnet ist, die in Kaskade angeordnet ist (40, 41, 42, 420, 410, 400, 43).

8. Vorrichtung nach einem der Ansprüche 2 bis 5, dadurch gekennzeichnet, daß das Modenfilter wenigstens einen Monomode-Wellenleiterteil (46) umfaßt, der auf einem Substrat (45) integriert ist, wobei optische Kopplungsmittel (42, 43) vorgesehen sind, um die ankommenden und austretenden optischen Strahlungen an den Enden des Filters zu koppeln.

9. Vorrichtung nach einem der Ansprüche 2 bis 5, dadurch gekennzeichnet, daß das Modenfilter ein Wellenleiter ist, welcher wenigstens einen Teil einer optischen Monomodefaser (50) umfaßt, wobei optische Kopplungsmittel (42, 44) vorgesehen sind, um die ankommenden und austretenden optischen Strahlungen an den Enden des Filters zu koppeln.

10. Vorrichtung nach einem der Ansprüche 8 und 9, dadurch gekennzeichnet, daß die Stirnflächen (51, 52) des Wellenleiters (46; 50) in bezug auf die Ausbreitungsrichtungen des Bündels derart orientiert sind, daß die durch diese Flächen reflektierte Energie in den Bereich außerhalb der optischen Kopplungsmittel (42, 43) fällt.

11. Vorrichtung nach einem der Ansprüche 1 bis 10, dadurch gekennzeichnet, daß die Interferometerschleife Spiegel (6, 7, 8) enthält.

12. Vorrichtung nach einem der Ansprüche 1 bis 10, dadurch gekennzeichnet, daß die Interferometerschleife eine optische Faser (60) umfaßt.

13. Gyrometer mit einer Interferometervorrichtung nach einem der Ansprüche 1 bis 12.

14. Meßsystem, welches auf das Magnetfeld anspricht, mit einer Interferometervorrichtung nach einem der Ansprüche 1 bis 12.

**Claims**

1. Annular interferometer device comprising optical members (6—8) defining a closed loop (2—8), optical means (9) coupled to this loop and separating an incident coherent radiation (10) into two radiations (11, 12) circulating in opposite senses within said loop, means (24) for detecting the interference of these two radiations (11, 12), said optical means (9) retransmitting these two radiations to these detection means (24), the propagation of said incident coherent radiation (10) and the propagation of the two retransmitted radiations (11, 12) occurring along an optical path (1) having a common course, characterized in that it comprises, arranged in this common course in such a manner that they are traversed by the incident coherent radiation (10) in a first sense and in opposite senses by the two retransmitted radiations (11, 12), filtering means (30) permitting to select a particular mode among all of the modes susceptible to propagate within said closed loop and to be retransmitted to the detection means (24).

2. Device according to claim 1, characterized in that the filtering means (30) are formed of a mode filter transmitting only a single mode.

3. Device according to claim 1, characterized in that the filtering means comprise a mode filter (31) associated with polarization means (32).

4. Device according to claim 3, characterized in that the polarization means (32) are located upstream from the input of the closed loop.

5. Device according to claim 3, characterized in that the polarization means (32) are located inside the closed loop.

6. Device according to any of claims 2 to 5, characterized in that the mode filter comprises at least one unit formed of lenses (42, 43) having a common focal plane (41) wherein a spatial filter (40) for separating the desired mode is located.

7. Device according to claim 6, characterized in that the unit is associated with at least one further unit of the same structure and arranged in cascade (40, 41, 42, 420, 410, 400, 43), in view of perfection of the filtering.

8. Device according to any of claims 2 to 5, characterized in that the mode filter comprises at least a portion of a monomode wave guide (46) integrated onto a substrate (45), optical coupling means (42, 43) being provided for coupling the optical incident and emerging radiations at the ends of the filter.

9. Device according to any of claims 2 to 5, characterized in that the mode filter is an optical wave guide comprising at least a portion of an optical monomode fibre (50), optical coupling means (42, 44) being provided for coupling the optical incident and emerging radiations at the ends of the filter.

10. Device according to any of claims 8 and 9, characterized in that the faces (51, 52) of the wave guide (46; 50) are orientated with respect to the directions of propagation of the beam in such a manner that the energy reflected by these faces falls outside the optical coupling means (42, 43).

11. Device according to any of claims 1 to 10, characterized in that the interferometer loop comprises mirrors (6, 7, 8).

12. Device according to any of claims 1 to 10, characterized in that the interferometer loop comprises an optical fibre (60).

13. Gyrometer comprising an interferometer device according to any of claims 1 to 12.

14. Measurement system responding to the magnetic field and comprising an interferometer device according to any of claims 1 to 12.

FIG.1

FIG. 2

FIG.3

FIG.4

# FIG.5

# FIG. 6

O O31 274

FIG. 7

FIG. 9

FIG. 10

FIG. 8

5

FIG.11